# EUROPEAN PATENT APPLICATION

(11) **EP 4 703 927 A1**
(43) Date of publication of application: **04.03.2026**
(21) Application number: 23941664.7
(22) Date of filing: 31.08.2023
(51) Int. Cl.: G06F 21/57, G06Q 50/10

(54) **SYSTEM, METHOD, AND PROGRAM FOR PERFORMING AUTOMATIC CRAWLING OF WEBSITE**

(30) Priority: 12.06.2023 JP 2023095987
(71) Applicant: AEYE SECURITY LAB INC., Tokyo 101-0054 (JP)
(72) Inventor: SUGIYAMA, Toshiharu, Tokyo 101-0054 (JP); ANZAI, Masato, Tokyo 101-0054 (JP); ASAI, Ken, Tokyo 101-0054 (JP)
(74) Representative: Viering, Jentschura & Partner mbB Patent- und Rechtsanwälte
(86) International application number: PCT/JP2023/031696
(87) International publication number: WO 2024/257365

(57) **Abstract**

A website inspection server 10 according to an embodiment of the present invention assists in setting appropriate input values for input items during the crawling of a website. The server 10 provides, to a user who operates a user terminal 30 communicatively connected to the server 10 through a communication network 20, a website inspection service in which a website 22 specified by the user is inspected. The server 10 identifies input items in a webpage and sets input values for the input items on the basis of information outputted from a trained model during the crawling of the website 22. Thus, use of input values suitable for various websites is promoted compared to when previously prepared input values are used.

## Description

### [Technical Field]

The present invention relates to a system, method, and program for crawling a website.

### [Background Art]

Crawling of a website has been performed for various purposes (e.g., see Patent Literature 1 below). Such crawling involves, for example, making a transition from one webpage to the next webpage by selecting an element such as a button that is included in the webpage and on which a link, script, or the like is set. If input items (e.g., input form elements, etc.) are present in the webpage, it is necessary to input and send an appropriate value. For example, a previously prepared value is set as such an input value.

### [Citation List]

### [Patent Literature]

[Patent Literature 1] Japanese Unexamined Patent Application Publication No. 2022-134094

### SUMMARY OF THE INVENTION

### Problem to be Solved by the Invention

However, a method for checking input values set for input items varies among websites, and it is difficult to previously prepare appropriate input values for all input items. Occurrence of an unexpected error due to setting of an inappropriate input value would interrupt the crawling, requiring a manual follow-up.

One object of embodiments of the present invention is to assist in setting appropriate input values for input items during the crawling of a website. Other objectives of the embodiments of the present invention will become apparent upon reference to the entire specification.

### [Means for Solving the Problems]

A system according to an embodiment of the present invention is a system for crawling a website. The system includes one or more computer processors. The one or more computer processors perform operations including acquiring a first webpage included in the website, setting an input value for an input item identified in the first webpage, and acquiring a second webpage that is a transition destination of the first webpage along with sending the set input value. The setting the input value includes inputting first input information including at least a part of first page information on the first webpage to a first trained model and setting the input value on the basis of first output information outputted from the first trained model.

A method according to an embodiment of the present invention is a method for crawling a website. The method is performed by one or more computers. The method includes acquiring a first webpage included in the website, setting an input value for an input item identified in the first webpage, and acquiring a second webpage that is a transition destination of the first webpage along with sending the set input value. The setting the input value includes inputting first input information including at least a part of first page information on the first webpage to a first trained model and setting the input value on the basis of first output information outputted from the first trained model.

A program according to an embodiment of the present invention is a program for crawling a website. The program causes one or more computers to perform operations including acquiring a first webpage included in the website, setting an input value for an input item identified in the first webpage, and acquiring a second webpage that is a transition destination of the first webpage along with sending the set input value. The setting the input value includes inputting first input information including at least a part of first page information on the first webpage to a first trained model and setting the input value on the basis of first output information outputted from the first trained model. Advantageous Effects of the Invention

The various embodiments of the present invention assist in setting appropriate input values for input items during the crawling of a website.

### BRIEF DESCRIPTION OF THE DRAWINGS

FIG. 1 is a schematic diagram showing the configuration of a network including a website inspection server 10 according to an embodiment of the present invention.
FIG. 2 is a diagram illustrating information managed by an inspection management table 152.
FIG. 3 is a diagram illustrating information managed by a page management table 154.
FIG. 4 is a diagram illustrating information managed by an error management table 156.
FIG. 5 is a flowchart illustrating a process that the website inspection server 10 performs when inspecting a website for vulnerabilities.
FIG. 6 is a diagram illustrating a target site setting screen 50.
FIG. 7 is a flowchart illustrating a process that the website inspection server 10 performs when crawling a website.
FIG. 8 is a diagram showing an example of input information inputted to a large language model capable of generating input values corresponding to input items and output information outputted therefrom.
FIG. 9 is a diagram showing another example of input information inputted to the large language model and output information outputted therefrom.
FIG. 10 is a diagram showing yet another example of input information inputted to the large language model and output information outputted therefrom.
FIG. 11 is a diagram illustrating an inspection result confirmation screen 60.
FIG. 12 is a diagram showing an example of input information inputted to a large language model configured to output input values alone and output information outputted therefrom.
FIG. 13 is a diagram showing an example of input information inputted to a large language model configured to output extended information on an error and output information outputted therefrom.

### DESCRIPTION OF EMBODIMENTS

Now, an embodiment of the present invention will be described with reference to the drawings. In the drawings, the same or similar components may be given the same reference signs.

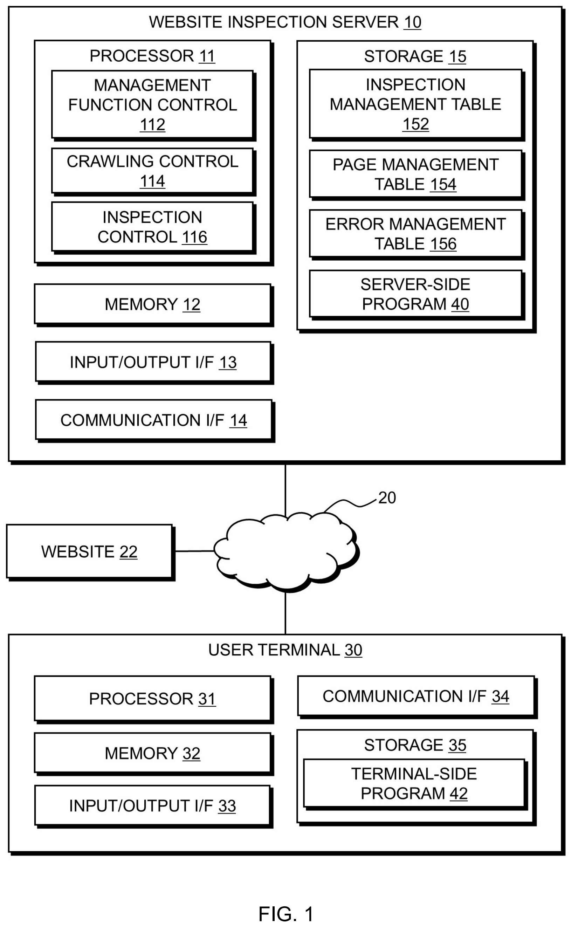

FIG. 1 is a schematic diagram showing the configuration of a network including a website inspection server 10 according to an embodiment of the present invention. As shown, the server 10 is communicatively connected to a user terminal 30 through a communication network 20 such as the Internet. Although only one user terminal 30 is shown in FIG. 1, the server 10 is communicatively connected to multiple user terminals 30. The website inspection server 10 provides, to a user who operates the user terminal 30, a website inspection service in which a website 22 specified by the user is inspected. The website inspection server 10 is an example of an apparatus that implements all or part of the system of the present invention.

First, the hardware configuration of the website inspection server 10 will be described. The website inspection server 10 consists of a general-purpose computer. As shown in FIG. 1, it includes a computer processor 11, main memory 12, an input/output I/F 13, a communication I/F 14, and storage 15. These components are electrically connected through a bus or the like (not shown).

The computer processor 11 consists of a CPU, GPU, or the like. It loads various programs stored in the storage 15 and the like into the main memory 12 and performs various commands included in the programs. The main memory 12 consists of, for example, DRAM or the like.

The input/output I/F 13 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 13 also includes an image output device such as a display and a sound output device such as a speaker.

The communication I/F 14 is implemented as hardware such as a network adapter, any type of communication software, or a combination of these and is configured to perform wired or wireless communication through the communication network 20 or the like.

The storage 15 consists of, for example, a magnetic disk, flash memory, or the like. The storage 15 is storing various programs including an operating system, various types of data, and the like. For example, as shown in FIG. 1, the storage 15 includes an inspection management table 152 that manages information on inspections, a page management table 156 that manages information on webpages included in a website 22 to be inspected, and an error management table 156 that manages information on an error(s) that occurred during the crawling of the website 22. These tables may be partially integrated into a single table or divided into multiple tables.

The storage 15 is also storing, for example, a server-side program 40 according to an embodiment of the present invention. The program 40 is a program for causing the server 10 to function as all or part of the system for providing website inspection services. The server-side program 40 may be configured such that at least part thereof is executed on the user terminal 30 through a terminal-side program 42 (to be discussed later).

In the present embodiment, the website inspection server 10 may consist of multiple computers each having the above hardware configuration. For example, the server 10 may consist of multiple server devices.

The website inspection server 10 thus configured can function as a web server and application server, that is, can perform various processes in response to a request from the user terminal 30 and send screen data (e.g., HTML data), control data, and the like corresponding to the results of the processes to the user terminal 30. The user terminal 30 can output thereon webpages or other screens based on the received data.

Next, the hardware configuration of the user terminal 30 will be described. The user terminal 30 consists of a general-purpose computer. As shown in FIG. 1, it includes a computer processor 31, main memory 32, an input/output I/F 33, a communication I/F 34, and storage 35. These components are electrically connected through a bus or the like (not shown).

The computer processor 31 consists of a CPU, GPU, or the like. It loads various programs stored in the storage 35 and the like into the main memory 32 and performs various commands included in the programs. The main memory 32 consists of, for example, DRAM or the like.

The input/output I/F 33 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 33 also includes an image output device such as a display and a sound output device such as a speaker.

The communication I/F 34 is implemented as hardware such as a network adapter, any type of communication software, or a combination of these and is configured to perform wired or wireless communication through the communication network 20 or the like.

The storage 35 consists of, for example, a magnetic disk, flash memory, or the like. The storage 35 is storing various programs including an operating system, various types of data, and the like. The programs stored in the storage 35 can be downloaded and installed from an application market or the like. The storage 35 is also storing the above-mentioned terminal-side program 42. The program 42 consists of a web browser or any other application (for example, a terminal-side application for website inspection services according to the present embodiment, etc.) and may be configured to execute at least a part of the server-side program 40, as described above.

In the present embodiment, the user terminal 30 may consist of a smartphone, tablet terminal, personal computer, or the like.

The user (the administrator of the website 22) who operates the user terminal 30 thus configured is able to use a website inspection service provided by the server 10 by communicating with the server 10 through the terminal-side program 42 installed in the storage 35 or the like.

Next, the functions of the website inspection server 10 configured as described above will be described. As shown in FIG. 1, the computer processor 11 of the server 10 is configured to function as a management function control unit 112, a crawling control unit 114, and an inspection control unit 116 by executing commands included in a program (e.g., at least a part of the server-side program 40) loaded into the main memory 12.

The management function control unit 112 is configured to perform various processes related to the control of website inspection service management functions. For example, the management function control unit 112 sends screen data, control data, and the like on various screens related to the management functions to the user terminal 30, performs various processes in response to inputs made by the user through the screens outputted on the user terminal 30, and sends the screen data, control data, and the like corresponding to the results of the processes to the user terminal 30. The management functions controlled by the management function control unit 112 include, for example, login processing (user authentication), billing control, user account management, and the like.

The crawling control unit 114 is configured to perform various processes related to the control of crawling of the website 22. For example, the crawling control unit 114 crawls the website 22 by acquiring a webpage included in the website 22, identifying transition target elements (e.g., various types of objects such as buttons, images, or text on which links, scripts, or the like are set) included in the webpage, selecting (clicking) the transition target elements to acquire destination webpages, and repeating these processes.

In the present embodiment, the crawling control unit 114 is configured to, when input items (e.g., input form elements) are present in a webpage, set input values for the input items and send the input values to make a transition to a destination webpage. In other words, the crawling control unit 114 identifies input items in a webpage, sets input values for the input items, and acquires a destination webpage that is the transition destination of the webpage along with sending the set input values.

In the present embodiment, setting of input values for input items is performed using a first trained model for setting such input values. For example, the crawling control unit 114 is configured to input input information including at least a part of page information on a webpage to the first trained model and to set input values for input items in the webpage on the basis of output information outputted from the first trained model. Such a trained model is generated through machine learning using a large amount of training data.

The inspection control unit 116 is configured to perform various processes related to the control of inspection of the website 22. For example, the inspection control unit 116 sends various requests to inspect, for predetermined inspection items, the webpages acquired by crawling the website 22 and makes determinations with respect to the inspection items on the basis of the contents of a response received from the website 22.

As seen above, the website inspection server 10 according to the present embodiment identifies input items in a webpage during the crawling of the website 22 and sets input values for the input items on the basis of information outputted from the trained model. Thus, use of input values suitable for various websites is promoted compared to when previously prepared input values are used. In other words, the website inspection server 10 assists in setting appropriate input values during the crawling of the website 22.

In the present embodiment, the inspection of website 22 includes various types of inspections. Examples of the inspection include an inspection (diagnosis) of the website 22 for vulnerabilities, as well as inspections of the website 22 for performance, functionality, and others.

In the present embodiment, the first trained model used to set input values for input items may be configured to output various types of information. For example, the first trained model may be configured to output input values themselves. More specifically, the first trained model may consist of, for example, a large language model (LLM) that, when receiving the HTML data of a webpage, as well as information to instruct the large language model to present input values to be set for input items in the webpage, outputs information presenting the input values themselves. By using the first trained model thus configured, the input values themselves outputted therefrom can be used.

For example, the first trained model may be configured to output combinations of input items and input values. More specifically, the first trained model may consist of, for example, a large language model (LLM) that, when receiving the HTML data of each webpage, as well as information to instruct the large language model to present combinations of input items and input values in the webpage, output information presenting the combinations. In this case, the identification of input items in each webpage is performed using the first trained model, and the crawling control unit 114 is configured to set, for input items outputted from the first trained model, input values corresponding to the input items outputted from the first trained model. By using the first trained model thus configured, the combinations of the input items and the input values outputted therefrom can be used.

For example, the first trained model may be configured to, when receiving combinations of input items and input values, output error possibility information indicating the possibilities that an error will occur when the corresponding input values are set for the input items. For example, the first trained model is generated through machine learning using a large amount of training data (e.g., page information on webpages (HTML data, etc.), input items in each webpage, input values set for the input items, information on whether an error has occurred after the input values are sent, etc.) and is configured to output scores or the like indicating the possibilities that an error will occur, as error possibility information. In this case, the crawling control unit 114 is configured to determine the possibility that an error will occur with respect to each of previously prepared multiple candidate input values that can be set for a specific input item, on the basis of the error possibility information outputted from the first trained model and to preferentially set a candidate input value having the lowest possibility that an error will occur. The crawling control unit 114 thus configured is able to set input values on the basis of the error possibility information outputted from the trained model.

The crawling control unit 114 may also be configured to determine whether an error is present in a webpage, on the basis of page information on the destination webpage of a transition involving sending input values set for input items in the webpage and to, when it determines that an error is present, set a new input value for the corresponding input item in the transition source webpage. The crawling control unit 114 thus configured is able to, when it determines that an error is present on the basis of the page information, set a new input value.

In the present embodiment, the determination as to whether an error is present based on the page information on the destination webpage also may be performed using a trained model generated through machine learning. For example, the crawling control unit 114 may be configured to input input information including at least a part of the page information on the destination webpage to a second trained model and to determine whether an error is present, on the basis of output information outputted from the second trained model. For example, the second trained model outputs information as to whether an error is present (a score indicating the possibility that an error is present, etc.), and the crawling control unit 114 determines whether an error is present, on the basis of this information (e.g., determines that an error is present when a score indicating the possibility that an error is present is equal to or higher than a threshold). The crawling control unit 114 thus configured is able to determine whether an error is present using the trained model.

In the present embodiment, the crawling control unit may identify multiple input items in each webpage and set corresponding input values on the multiple input items. In this case, the second trained model for determining an error may be configured to output information for identifying an input item corresponding to an input value causing an error among the multiple input items (e.g., information indicating the possibilities that the respective multiple input items correspond to an input value causing an error, information identifying an input item itself corresponding to an input value causing an error, etc.). The crawling control unit 114 thus configured is able to identify an input item corresponding to an input value causing an error using the trained model.

The crawling control unit 114 may also be configured to, when it determines that an error is present by sending input values set for input items in the destination source webpage, add data including a combination of an input value causing the error and a corresponding input item as training data of the second trained model. The crawling control unit 114 thus configured assists in properly additionally training the trained model for determining an error.

The crawling control unit 114 may also be configured to, when it determines that an error is present, present information on the error to the user. For example, the crawling control unit 114 presents information on an error in a screen (e.g., managed by the error management table 156) to the user by sending screen data, control data, and the like on the screen including the information to the user terminal 30. The crawling control unit 114 thus configured is able to notify the user (e.g., the administrator of the website 22, etc.) of the information on the error.

Next, a specific example of an aspect of the website inspection server 10 according to the present embodiment having these functions will be described. In this specific example, the server 10 provides a vulnerability inspection service in which a website is inspected for vulnerabilities, as an example of a website inspection service.

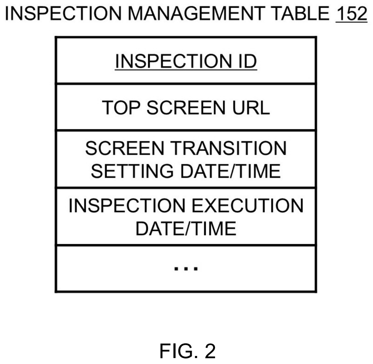

First, information managed by each table in this example will be described. FIG. 2 illustrates information managed by the inspection management table 152 in this example. The inspection management table 152 in this example manages information on specific inspections. Specifically, as shown, it manages information such as a "top screen URL" that is the URL of a top screen (top page) serving as the starting point of a specific inspection performed on a website to be inspected, a "screen transition setting date/time" that is the date and time of setting of screen transitions, and an "inspection execution date/time" that is the date and time of execution of the specific inspection such that these pieces of information are associated with an "inspection ID" that identifies the specific inspection (case).

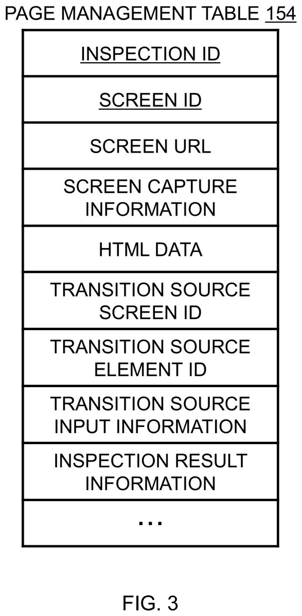

FIG. 3 illustrates information managed by the page management table 154 in this example. The page management table 154 in this example manages information on multiple webpages (screens) included in a website to be inspected. Specifically, as shown, it manages information such as a "screen URL" that is the URL of a specific screen in a specific inspection, "screen capture information" that is information on the screen capture of the specific screen, "HTML data" of the specific screen, a "transition source screen ID" that identifies the transition source screen of the specific screen, a "transition source element ID" that identifies an element in the transition source screen of the specific screen (a transition target element clicked when making a transition to the specific screen), "transition source input information" that is information on input values inputted for input items, and "inspection result information" that is information on the inspection results of the specific screen such that these pieces of information are associated with a combination of an "inspection ID" that identifies the specific inspection and a "screen ID" that identifies the specific screen.

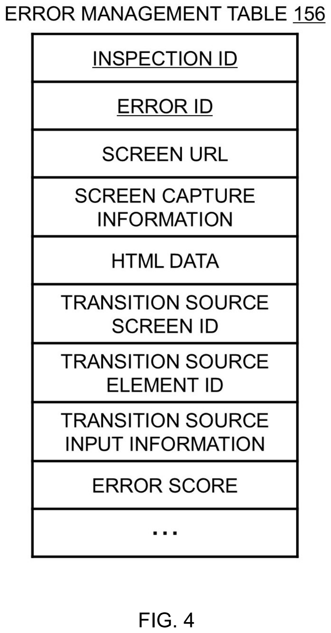

FIG. 4 illustrates information managed by the error management table 156 in this example. In this example, the error management table 156 manages information on an error that occurred during the crawling of a website to be inspected. Specifically, as shown, it manages information such as a "screen URL" that is the URL of a screen in which a specific error occurred during a specific inspection, "screen capture information" that is information on the screen capture of the screen, "HTML data" of the screen, a "transition source screen ID" that identifies the transition source screen of the screen, a "transition source element ID" that identifies a transition source element in the transition source screen of the screen (a transition target element clicked when making a transition to the screen), "transition source input information" that is information on input values inputted for input items in the transition source screen, and an "error score" that indicates the possibility that an error has occurred in the screen such that these pieces of information are associated with a combination of an "inspection ID" that identifies the specific inspection and an "error ID" that identifies the specific errorin the specific inspection.

The information managed by the tables in this example has been described above. Next, processes performed by the website inspection server 10, screens outputted on the user terminal 30, and the like in this example will be described.

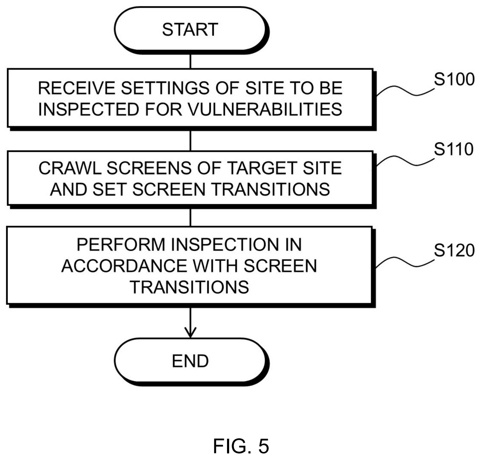

FIG. 5 is a flowchart illustrating a process that the website inspection server 10 performs when inspecting a website for vulnerabilities in this example. As shown, the server 10 first receives settings of the website to be inspected for vulnerabilities (step S100). The server 10 receives the settings through a screen outputted on the user terminal 30.

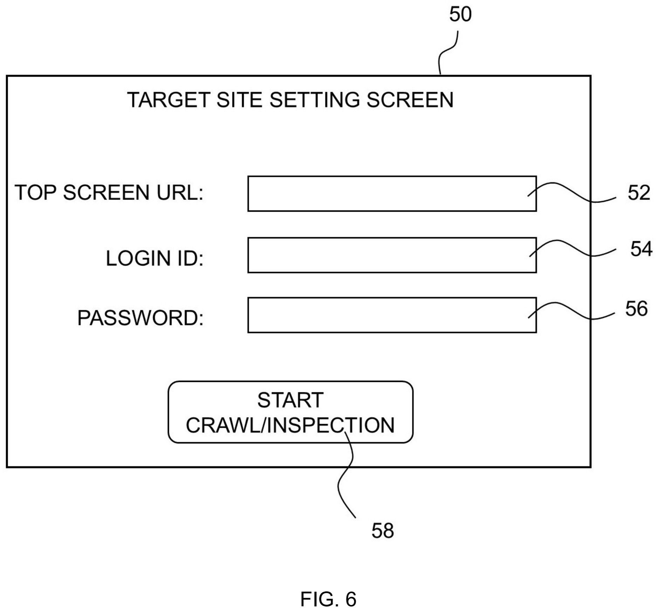

FIG. 6 illustrates a target site setting screen 50 that is outputted on the user terminal 30 and is used to input the settings of the website to be inspected. As shown, the screen 50 includes a URL input field 52 for inputting the URL of the top screen (top page) of the website to be inspected, a login ID input field 54 for inputting a login ID used to log in to the website, a password input field 56 for inputting a password used to log in to the website, and a continue button 58 provided with text "start crawling/inspection". As seen above, in this example, the URL of the top screen, the login ID, and the password are inputted as information on the settings of the website to be inspected.

The continue button 58 is an object for instructing the server 10 to crawl and inspect the website to be inspected. Referring back to the flowchart of FIG. 5, when the continue button 58 is selected, the server 10 crawls the website to be inspected and sets screen transitions for an inspection (step S110).

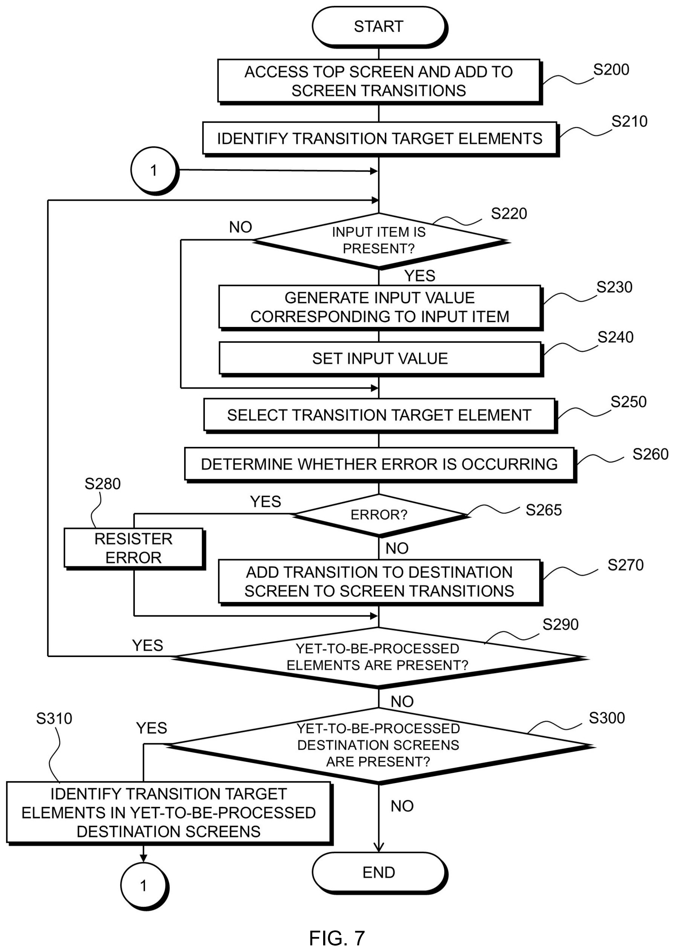

FIG. 7 is a flowchart illustrating a process that the server 10 performs when crawling the website. As shown, first, the server 10 accesses the top screen of the website to be inspected and adds the top screen to screen transitions (step S200). Specifically, the server 10 starts the browser and accesses the top screen specified by the URL inputted through the target site setting screen 50. The server 10 then registers information on the top screen in the page management table 154 and, more specifically, sets the inspection ID, screen ID, screen URL, screen capture information, and HTML data therein. As seen above, the page management table 154 can also be said to be a table that manages screen transitions set for specific inspections.

The server 10 then identifies multiple transition target elements included in the top screen (step S210). Specifically, the server 10 identifies screen components (buttons, images, text, etc.) on which links, scripts, or the like are set, as transition target elements. The identification of the elements is performed on the basis of the corresponding HTML data. For example, elements corresponding to button tags, img tags, input tags (type="button"), and the like are candidate transition target elements.

Then, if input items (e.g., input form elements) are present (YES in step S220), the server 10 generates input values corresponding to the input items and sets the generated input values (steps S230, S240). Whether input items are present is determined on the basis of the corresponding HTML data. For example, an input tag (type="text"), a textarea tag, and the like are candidate input items.

Specifically, the input values corresponding to the input items are generated using a trained model capable of generating such an input value. In this example, the trained model consists of a large language model and is configured to, when receiving the HTML data of the target screen, as well as information instructing the trained model to present combinations of input items and input values in the screen, output input items included in the screen along with corresponding input values (i.e., output combinations of input items and input values). For example, GPT-4 provided by the U.S.-based OpenAI can be used as such a large language model.

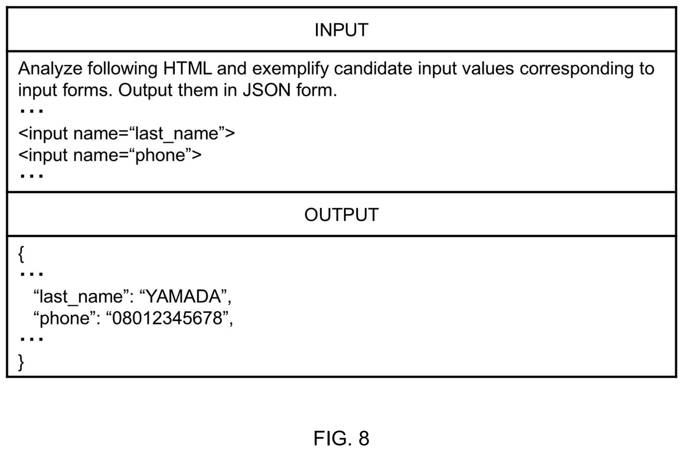

FIG. 8 shows an example of input information inputted to the large language model and output information outputted therefrom. By instructing the model to output information in a JSON format, in the input information as shown, the server 10 is able to set input values on the basis of the output information.

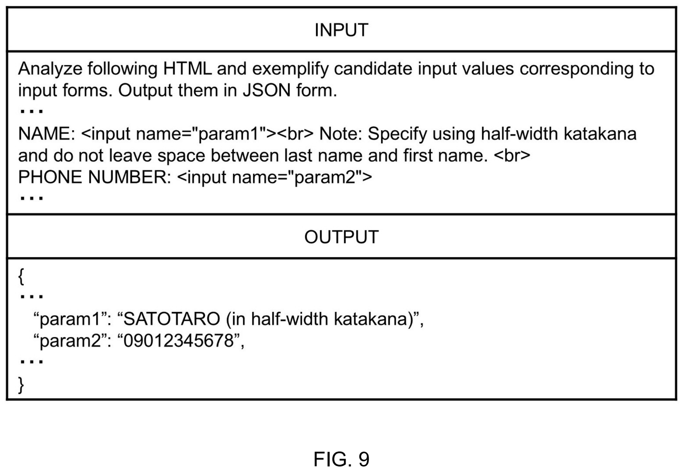

FIG. 9 shows another example of input information inputted to the large language model and output information outputted therefrom. As shown, even when parameter names ("param1" and "param2") in the HTML data do not indicate the purposes of the parameters, the large language model is able to determine the purposes of the parameters on the basis of surrounding elements such as labels. Moreover, even when input rules are specified in a natural language (e.g., a description "Specify using half-width kana; do not leave a space between the last name and first name"), the large language model is able to present input values according to these rules.

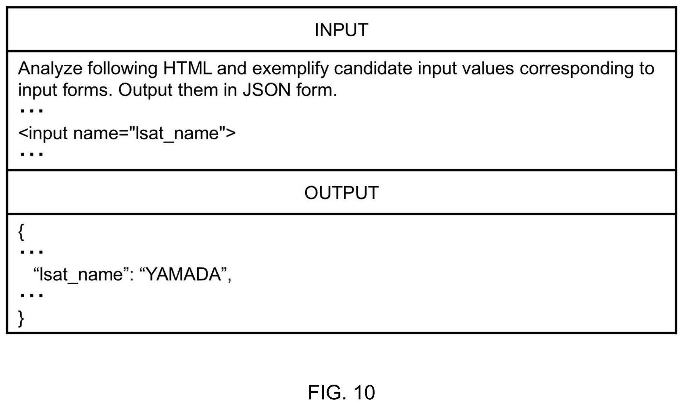

FIG. 10 shows yet another example of input information inputted to the large language model and output information outputted therefrom. As shown, even when there is a misspelling in a parameter name in the HTML data ("lsat_name" is a misspelling of "last_name"), the large language model is able to predict such a misspelling and to determine the purpose of the parameter.

The server 10 then selects (clicks) a corresponding transition target element (step S250). Note that if no input item is present (NO in step S220), the server 10 selects the transition target element immediately.

The server 10 determines whether an error is occurring in the destination screen (step S260). Specifically, whether an error is occurring is determined using a trained model for determining whether such an error is occurring. In this example, the trained model is generated through machine learning using a large amount of training data and configured to, when receiving the HTML data of the transition source screen, an HTTP request (including input values set for input items), and an HTTP response (including the HTML data of the destination screen), output an error score indicating the possibility that an error is occurring. If the value of the error score is equal to or higher than a threshold, the server 10 determines that an error is occurring. If the value of the error score is lower than the threshold, it determines that no error is occurring.

For example, when a message indicating an error is displayed only in a natural language (such as phrases that cannot be listed in advance) (e.g., a message such as "the process could not be completed" is displayed), it is difficult to determine the error using a rule-based method. However, such an error can be determined by using the trained model.

If it does not determine that an error is occurring in the destination screen (NO in step S265), the server 10 adds the transition to the destination screen to the screen transitions (step S270). Specifically, the server 10 registers information on the destination screen in the page management table 154 and, more specifically, sets the inspection ID, screen ID, screen URL, screen capture information, HTML data, transition source screen ID, transition source element ID, and transition source input information therein. The combinations of input items and input values are set in the transition source input information.

If no error is occurring but the destination screen is a screen that does not need to be added to the screen transitions, the server 10 does not have to add the destination screen to the screen transitions. For example, if the destination screen is a screen of a site outside the website to be inspected or a screen that overlaps a screen already included in the screen transitions (whether the screens overlap each other is determined on the basis of, for example, the similarity therebetween) or the like, the server 10 determines that the destination screen is a screen that does not need to be added to the screen transitions.

In contrast, if it determines that an error is occurring in the destination screen (YES in step S265), the server 10 registers the error in the destination screen (step S280). Specifically, the server 10 sets the inspection ID, the error ID, the screen URL, the screen capture information, the HTML data, the transition source screen ID, the transition source element ID, the transition source input information, and the error score in the error management table 156. Note that the destination screen in which an error is occurring is not added to the screen transitions.

With respect to each of the multiple transition target elements included in the top screen, the server 10 adds a transition to a destination screen in response to selection (click) of the element to the screen transitions, or registers an error. If yet-to-be-processed elements are no longer present (NO in step S290), the server 10 then, as in the top screen, identifies multiple transition target elements included in each of the screens added to the screen transitions (step S280) and adds a transition to a destination screen in response to selection of each element to the transition screens, or registers an error (steps S220 to S290). These steps are repeated until a new screen is no longer added to the screen transitions (NO in step S300).

Referring back to the flowchart of FIG. 5, when the screen transitions are set as seen above, the server 10 then inspects the website for vulnerabilities in accordance with the set screen transitions (step S120). Specifically, it launches a web browser, sequentially crawls the screens included in the screen transitions in accordance with the information managed in the page management table 154, and inspects each screen for predetermined vulnerability inspection items. Examples of the vulnerability inspection items include items defined in the OWASP Top 10. The inspection results are registered in the inspection result information in the page management table 156. Note that the server 10 may inspect each screen for the inspection items during the crawling of the website (i.e., during the setting of the screen transitions).

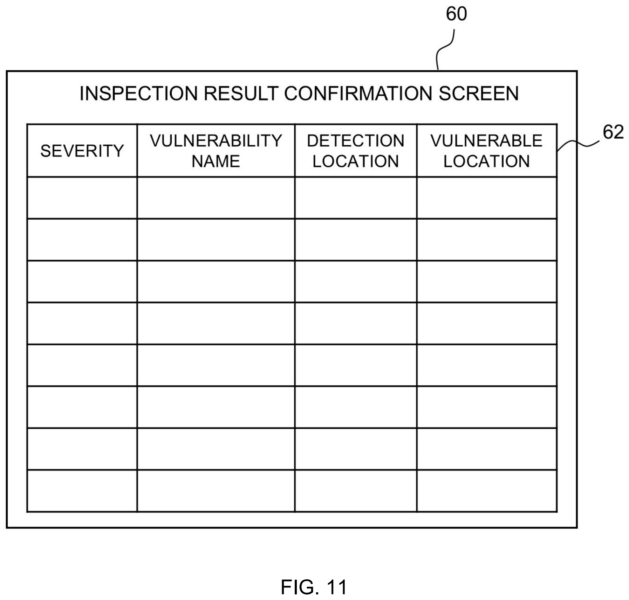

FIG. 11 illustrates an inspection result confirmation screen 60 that is displayed on the user terminal 30 and used to confirm inspection results. As shown, the screen 60 includes a list area 62 in which the results of a vulnerability inspection are listed. The vulnerability inspection results (the severity, vulnerability name, detection location, vulnerable location, etc.) of each screen are listed in the area 62. These pieces of information are managed in the inspection result information in the page management table 154.

In the above example, the information managed in the error management table 156 is automatically added to training data for additionally training the above trained model for determining an error in the destination screen.

In the above example, a screen including the information managed in the error management table 156 may be outputted on the user terminal 30 of the corresponding user (e.g., the administrator of the website, etc.).

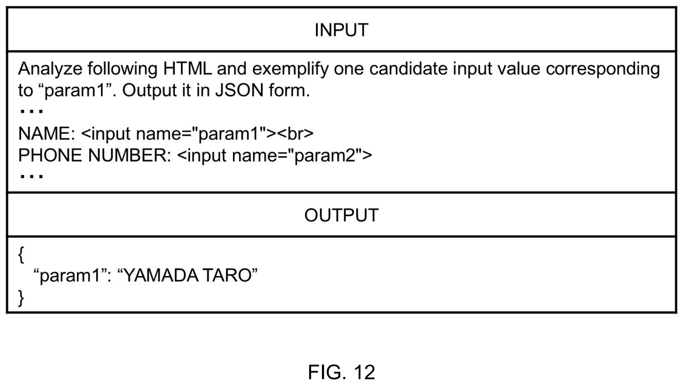

While, in the above example, combinations of input items and input values are outputted from the trained model consisting of a large language model, input values alone may be outputted. In this case, the server 10 identifies input items the basis of the HTML data of the target screen and inputs, to the trained model, the HTML data, as well as information instructing the trained model to present input values corresponding to the identified input items. Thus, information presenting the input values themselves is outputted from the trained model. FIG. 12 shows an example of input information inputted to the large language model and output information outputted therefrom in this case. In this example, "param1" is the parameter of an input item (name) identified on the basis of the HTML data of the target screen, and such input information is automatically generated by the server 10.

The trained model may be configured to, when receiving HTML data and combinations of input items and input values, output information indicating the possibilities that an error will occur (error scores or the like). In this case, the server 10 may identify input items on the basis of the HTML data of the target screen, or the like, acquire information indicating the possibilities that (predetermined) multiple candidate input values that can be set for each input item will cause an error from the trained model, and use a candidate input value having the lowest possibility.

While, in the above example, the trained model for determining an error in the destination screen is configured to, when receiving the HTML data of the transition source screen, an HTTP request, and an HTTP response, output an error score indicating the possibility that an error is occurring, it may be configured to output information for identifying an input item corresponding to an input value causing an error among multiple input items. For example, the trained model may consist of a large language model and may be configured to, when receiving the HTML data of the transition source screen, an HTTP request, and an HTTP response, as well as information instructing the trained model to present an input item corresponding to an input value causing an error, output information presenting such an input item.

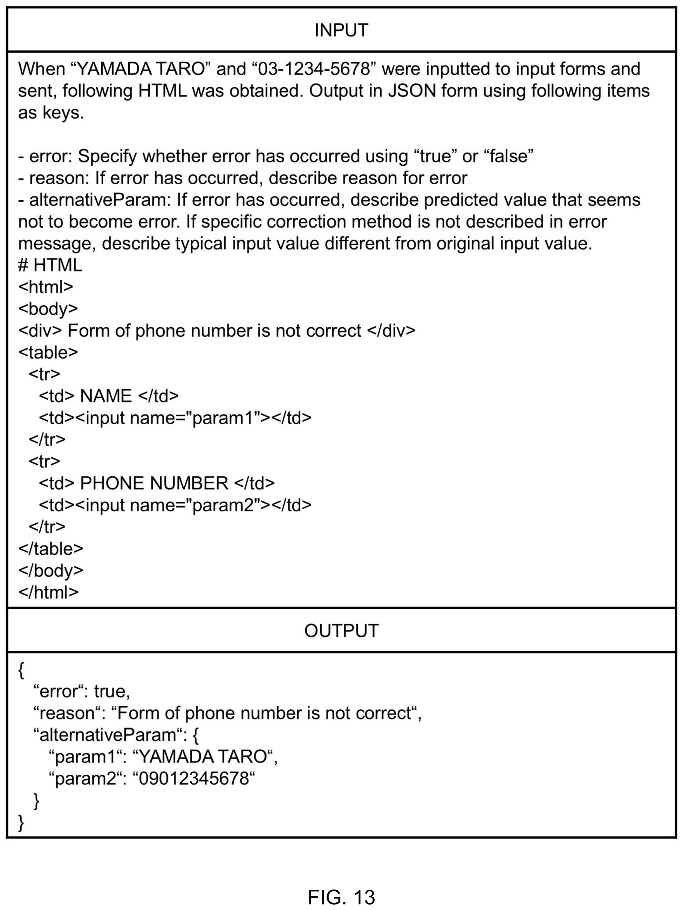

Moreover, extended information such as the reason for an error and an alternative input value may be acquired from a trained model for determining an error. Such a trained model may consist of a large language model and may be configured to, when receiving the HTML data of the transition source screen and input values corresponding to input items, as well as information instructing the trained model to present extended information, output information presenting the extended information. FIG. 13 shows an example of input information inputted to a large language model and output information outputted therefrom in this case. The extended information thus acquired is managed in, for example, the error management table 156.

In the above example, a vulnerability inspection service in which a website is inspected for vulnerabilities is provided. In another example of the present embodiment, a website inspection service in which a website is inspected for items other than vulnerabilities, for example, performance, functionality, or the like may be provided.

The website inspection server 10 according to the present embodiment described above identifies input items in webpages and sets input values for the input items on the basis of information (e.g., combinations of input items and input values) outputted from the trained model during the crawling of the website 22. Thus, use of input values suitable for various websites is promoted compared to when previously prepared input values are used. In other words, the website inspection server 10 assists in setting appropriate input values during the crawling of the website 22.

In another embodiment of the present invention, some or all of the functions of the website inspection server 10 according to the above embodiment may be performed by collaboration of the website inspection server 10 and user terminal 30 or by the user terminal 30. Moreover, in another embodiment of the present invention, the website 22 may be crawled for various purposes other than an inspection of the website 22.

The processes and procedures described in the present specification may be performed by software, hardware, or any combination thereof other than those described explicitly. For example, the processes and procedures described in the present specification may be performed by implementing logic corresponding to the processes and procedures in a medium such as an integrated circuit, volatile memory, non-volatile memory, or magnetic disk. The processes and procedures described in the present specification may also be implemented as a computer program corresponding to those and performed by various types of computers.

Even when it is stated that the processes and procedures described in the present specification are performed by a single apparatus, software, component, or module, those processes or procedures may be performed by multiple apparatuses, multiple types of software, multiple components, and/or multiple modules. The software and hardware components described in the present specification may be implemented by integrating them into less components or by decomposing them into more components.

When the components of the invention are described in a singular or a plural form in the present specification or even when the components are described without specifying a singular form or plural form, the components may be singular or plural unless the number of each component should be interpreted otherwise in the context.

## Claims

1. A system for crawling a website, the system comprising one or more computer processors,
wherein the one or more computer processors perform operations comprising:
acquiring a first webpage included in the website;
setting an input value for an input item identified in the first webpage; and
acquiring a second webpage that is a transition destination of the first webpage along with sending the set input value, and
wherein the setting the input value comprises inputting first input information including at least a part of first page information on the first webpage to a first trained model and setting the input value on the basis of first output information outputted from the first trained model.

2. The system of claim 1, wherein the first output information includes the input value.

3. The system of claim 1,
wherein the first output information includes a combination of the input item and the input value, and
wherein the setting the input value comprises setting the input value included in the first output information for the input item included in the first output information.

4. The system of claim 1,
wherein the first input information includes a combination of the input item and the input value,
wherein the first output information includes error possibility information indicating a possibility that an error will occur when the input value is set for the input item, and
wherein the setting the input value comprises determining whether to set the input value, on the basis of the error possibility information.

5. The system of claim 1,
wherein the one or more computer processors further perform operations comprising:
determining whether an error is present, on the basis of second page information on the second webpage; and
if it is determined that the error is present, setting a new input value for the input item.

6. The system of claim 5, wherein the determining whether the error is present comprises inputting second input information including at least a part of the second page information to a second trained model and determining whether the error is present, on the basis of second output information outputted from the second trained model.

7. The system of claim 6, wherein the second output information includes information on whether the error is present.

8. The system of claim 6,
wherein the setting the input value comprises identifying a plurality of input items in the first webpage and setting corresponding input values for the input items, and
wherein the second output information includes information on the input item corresponding to the input value causing the error among the input items.

9. The system of claim 6,
wherein the one or more computer processors further perform an operation comprising if it is determined that the error is present, adding data including a combination of the input item and the input value set for the input item and sent, as training data of the second trained model.

10. The system of claim 5, wherein the one or more computer processors further perform an operation comprising if it is determined that the error is present, presenting information on the error to a user.

11. A method for crawling a website, the method being performed by one or more computers, the method comprising:
acquiring a first webpage included in the website;
setting an input value for an input item identified in the first webpage; and
acquiring a second webpage that is a transition destination of the first webpage along with sending the set input value, wherein
the setting the input value comprises inputting first input information including at least a part of first page information on the first webpage to a first trained model and setting the input value on the basis of first output information outputted from the first trained model.

12. A program for crawling a website, the program causing one or more computers to perform operations comprising:
acquiring a first webpage included in the website;
setting an input value for an input item identified in the first webpage; and
acquiring a second webpage that is a transition destination of the first webpage along with sending the set input value, and
wherein the setting the input value comprises inputting first input information including at least a part of first page information on the first webpage to a first trained model and setting the input value on the basis of first output information outputted from the first trained model.
